# EUROPEAN PATENT APPLICATION

(11) **EP 2 667 494 A1**
(43) Date of publication of application: **27.11.2013**
(21) Application number: 12191098.8
(22) Date of filing: 02.11.2012
(51) Int. Cl.: H02K 19/10, H02K 16/04

(54) **Electrical reluctance machine with two stators**

(71) Applicant: ABB Technology Ltd, 8050 Zürich (CH)
(72) Inventor: Liu, Yujing, 72210 Västerås (SE); Islam, Jahirul, 722 22 Västerås (SE)
(74) Representative: Savela, Reino Aleksi

(57) **Abstract**

An electrical machine comprises a first stator (100), a second stator (110), and a rotor (10) arranged between the first and second stators (100, 110). The rotor (10) comprises a plurality of rotor poles (40) being magnetically isolated from each other in circumferential direction of the rotor (10). By arranging a rotor (10) between two stators (100, 110), the rotor (10) does not necessarily need to carry magnetic flux (170) in circumferential direction, and consequently a lighter rotor construction can be used. The rotor poles (40) are configured to carry magnetic flux (170) in two opposite directions in order to be able to utilize a reluctance principle and give all the rotor poles (40) an identical construction.

## Description

### TECHNICAL FIELD

The present invention relates to an electrical reluctance machine with a rotor arranged between two stators.

### BACKGROUND ART

Operating principle of reluctance machines is based on an anisotropic structure of a rotor in terms of magnetic reluctance. The rotor of a reluctance machine comprises a plurality of poles, each pole defining a direction of minimum reluctance, a so-called direct axis or d-axis. Between each pair of poles in circumferential direction of the rotor there is a direction of maximum reluctance, a so-called quadrature axis or q-axis. In a conventional inner rotor reluctance machine the rotor is surrounded by a stator comprising poly-phase windings, the poles of the rotor interacting with rotating magnetic fields created by the stator windings such that a rotating movement of the rotor is achieved.

Reluctance machines with two stators, one positioned radial outside of the rotor and another positioned radial inside of the rotor, are known e.g. from US20110285238 and KR20120097718. In the known reluctance machines the magnetic flux created by the stator is carried by the rotor material in circumferential direction of the rotor between two neighbouring d-axes and across a q-axis in the middle, as illustrated in figure 5 of US20110285238. Consequently, the rotor needs to have a low magnetic reluctance not only at the d-axes but also in circumferential direction across the q-axes. In practice the conventional rotors therefore comprise a material with high magnetic permeability also at the q-axes where low magnetic reluctance is not desired in radial direction. The magnetic material at q-axes decreases a saliency, i.e. a relation between a d-axis inductance and a q-axis inductance, of the rotor, and consequently the power factor of the machine. The conventional rotors are also relatively heavy in structure because of the requirement of material in circumferential direction of the rotor in order to be able to carry the magnetic flux without magnetic saturation.

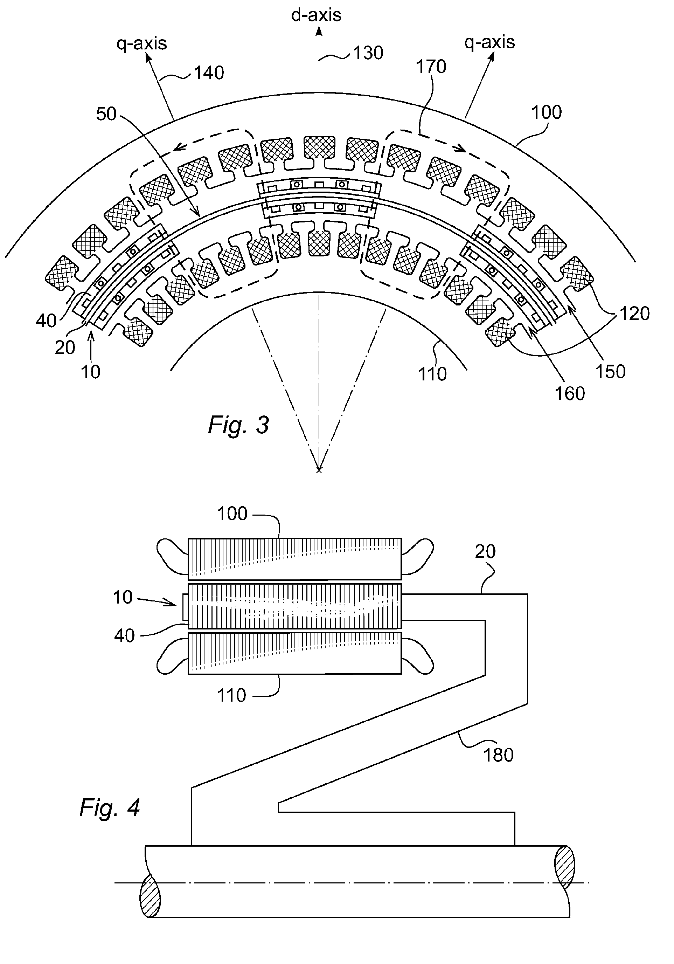

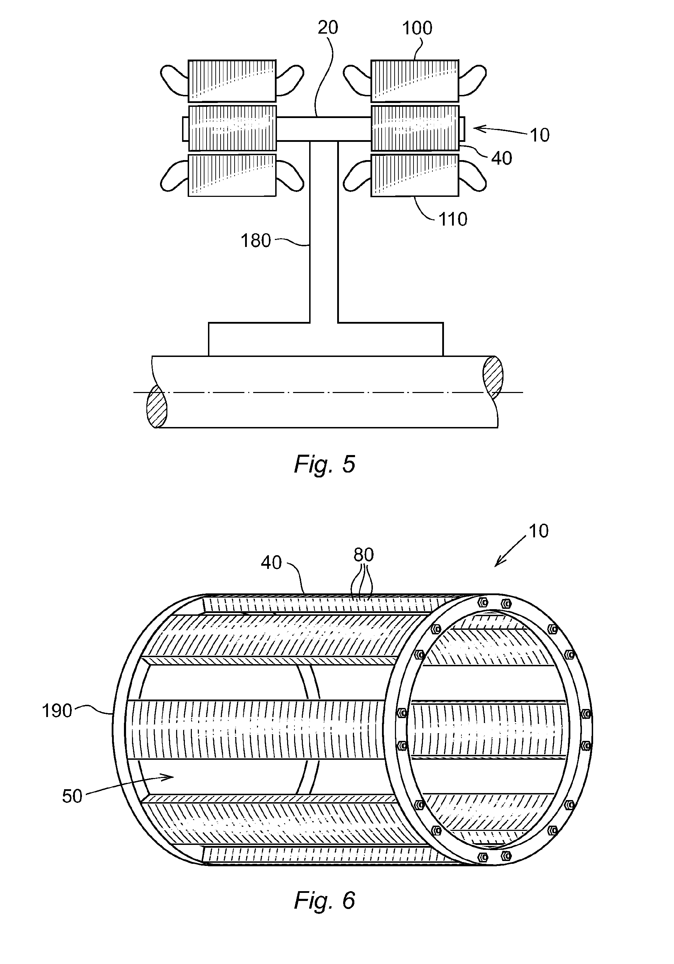

DE19753916 discloses an electrical machine where the rotor is not supposed to carry any magnetic flux in circumferential direction of the same. In embodiments according to figures 4 and 5 neighbouring poles of the rotor are magnetically isolated from each other in circumferential direction of the rotor by a rotor frame made of aluminium. The rotors according to DE19753916 are however not compatible with reluctance machines because the permanent magnets make that each rotor pole is configured to carry magnetic flux only in a single radial direction.

### SUMMARY OF THE INVENTION

One object of the invention is to provide an improved electrical reluctance machine with a light rotor structure.

This object is achieved by the device according to appended claim 1.

The invention is based on the realization that by arranging a rotor between two stators, the rotor does not necessarily need to carry magnetic flux in its circumferential direction, and consequently a lighter rotor construction can be used. By configuring the rotor poles such that magnetic flux may pass in both directions between the stators, a reluctance principle can be utilized and it does not matter in which direction the magnetic flux crosses each pole when the machine is in operation.

According to a first aspect of the invention, there is provided an electrical machine comprising a first stator, a second stator, and a rotor arranged between the first and second stators. The rotor comprises at least two neighbouring rotor poles, the at least two rotor poles being magnetically isolated from each other in a circumferential direction of the rotor. Each of the at least two rotor poles is configured to carry magnetic flux in two opposite directions. When the rotor poles are configured to carry magnetic flux in both main directions in which the flux created by the stators crosses the rotor, all the rotor poles can assume both polarities when the machine is in operation. Consequently, all the rotor poles can be construed identical.

According to one embodiment of the invention, the at least two rotor poles are identical. This provision involves that only one type of rotor pole needs to be manufactured, and that the rotor poles are interchangeable.

According to one embodiment of the invention, the first stator is arranged radial outside of the second stator, and the rotor is arranged in radial direction between the first and second stators.

According to one embodiment of the invention, the at least two rotor poles are configured to carry magnetic flux in both radial directions.

According to one embodiment of the invention, each of the at least two rotor poles comprises material with a first magnetic permeability, the magnetic isolation between the two rotor poles comprises material with a second magnetic permeability, the first magnetic permeability being at least five times the second magnetic permeability, such as at least ten times, or at least fifty times the second magnetic permeability. The magnetic isolation between the at least two rotor poles can be achieved with a material having a low magnetic permeability. A great ratio of the magnetic permeabilities of the poles and the isolation improves the power factor of the machine.

According to one embodiment of the invention, the magnetic isolation between the at least two rotor poles comprises aluminium, stainless steel or air.

According to one embodiment of the invention, the rotor comprises a cylindrical and self-sustainable rotor frame comprising aluminium or stainless steel.

According to one embodiment of the invention, each of the at least two rotor poles comprises a plurality of laminated iron sheets.

According to one embodiment of the invention, the electrical machine further comprises a first air gap between the first stator and the rotor, the smallest dimension between the first stator and the second stator being at least five times the smallest dimension of the first air gap, such as at least ten times the smallest dimension of the first air gap. A relatively large distance between the stators compared with the distance between the stators and the rotor is advantageous in that the stators can be made well magnetically isolated at q-axes and well magnetically connected at d-axes.

According to one embodiment of the invention, the rotor frame is supported from between its axial ends by at least one radially extending spoke.

According to one embodiment of the invention, the rotor comprises a plurality of circular rotor laminates cut in one piece and stacked in axial direction.

According to one embodiment of the invention, each of the at least two rotor poles have chamfered edges. By this measure a torque fluctuation is reduced.

According to one embodiment of the invention, at most ten per cent, such as at most five per cent, of the total flux is carried in circumferential direction of the rotor along the isolation sections in normal operation of the machine.

### BRIEF DESCRIPTION OF THE DRAWINGS

The invention will be explained in greater detail with reference to the accompanying drawings, wherein
- figure 1: shows a rotor for an electrical motor according to one embodiment of the invention,
- figure 2: shows one embodiment of a rotor pole attachment,
- figure 3: shows a cross-sectional view in an axial direction of an electrical machine according to one embodiment of the invention,
- figure 4: shows a cross-sectional view in a radial direction of an electrical machine according to one embodiment of the invention,
- figure 5: shows a cross-sectional view in a radial direction of an electrical machine according to one embodiment of the invention,
- figure 6: shows a rotor for an electrical motor according to one embodiment of the invention,
- figure 7: shows a rotor laminate for an electrical motor according to one embodiment of the invention, and
- figure 8: shows a rotor pole with chamfered edges.

### DESCRIPTION OF PREFERRED EMBODIMENTS

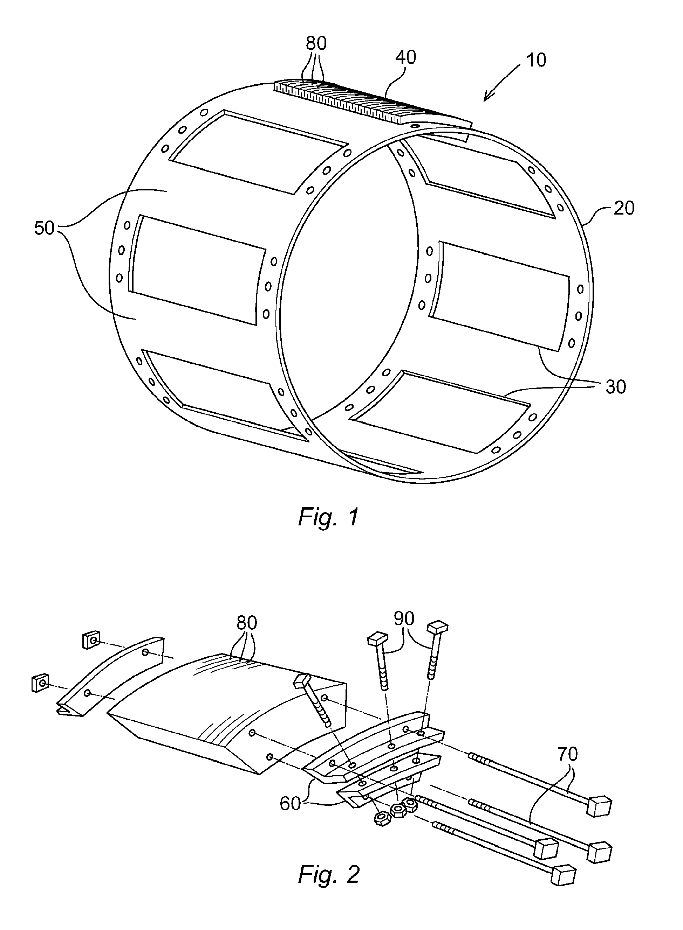

Referring to figure 1, a rotor 10 for an electrical machine according to one embodiment of the invention comprises a cylindrical rotor frame 20 made of stainless steel. The rotor frame 20 has openings 30 for receiving rotor poles 40 consisting of a plurality of laminated iron sheets 80. For the sake of illustration only one rotor pole 40 is shown in figure 1. The rotor poles 40 have a high magnetic permeability, a relative permeability in the order of 4000 at 0,002 T (tesla). The rotor frame 20 has a low magnetic permeability, a relative permeability in the order of 100 at 0,002 T. Because of the low magnetic permeability of the rotor frame 20, the rotor poles 40 are magnetically isolated from each other by the isolation sections 50 in circumferential direction of the rotor 10. Only a small fraction of the magnetic flux crossing an air gap between a stator and a rotor pole 40 is carried to the neighbouring rotor poles 40 along the rotor circumference, and consequently the amount of flux leaking at the q-axis 140 between the rotor frame 20 and the stator without ever crossing the neighbouring rotor poles 40 is small. In the context of the present invention the rotor poles 40 are considered to be magnetically isolated from each other when at most twenty per cent of the total flux is carried in circumferential direction of the rotor 10 along the isolation sections 50 in normal operation of the machine. Preferably at most ten per cent, such as at most five per cent, of the total flux is carried in circumferential direction of the rotor 10 along the isolation sections 50 in normal operation of the machine.

Referring to figure 2, the rotor poles 40 are attached to the rotor frame 20 by means of brackets 60 and bolts. Axial bolts 70 are used to fix the brackets 60 and the plurality of iron sheets 80 together in axial direction, and radial bolts 90 are used to fix the brackets 60 to the rotor frame 20.

Referring to figure 3, according to one embodiment of the invention a first stator 100 is arranged radial outside of a second stator 110, and a rotor 10 is arranged in radial direction between the first and second stators 100, 110. The rotor poles 40 represent the d-axes 130 of the rotor 10, while the isolation sections 50 represent the q-axes 140. The rotor frame 20 is made of stainless steel. A magnetic flux 170 created by stator currents in stator coils 120 crosses the rotor 10 mainly at the d-axes 130. Almost all flux 170 crossing a first air gap 150 between the first stator 100 and the rotor poles 40 also crosses a second air gap 160 between the rotor poles 40 and the second stator 110. Because of the magnetically isolating material and a relatively small area, only a small fraction of the flux 170 is carried between two neighbouring rotor poles 40 along the isolation sections 50 and back to the first stator 100 without entering the second stator 110. Similarly, the magnetically isolating material and the large air-gap at the q-axes 140 contributes to that only a small fraction of the flux 170 crosses the rotor 10 in radial direction at the q-axes 140. It is preferable that both stators 100, 110 have stator coils 120, although the machine would work also with only one of the two stators 100, 110 having stator coils 120.

Referring to figures 4 and 5, according to two alternative embodiments of the invention the rotor frame 20 may be supported from a single axial end or from between the axial ends by radially extending spokes 180.

Referring to figure 6, according to one embodiment of the invention the isolation sections 50 consist solely of air. The rotor frame 20 comprises end rings 190 to which the rotor poles 40 are attached via their axial ends only.

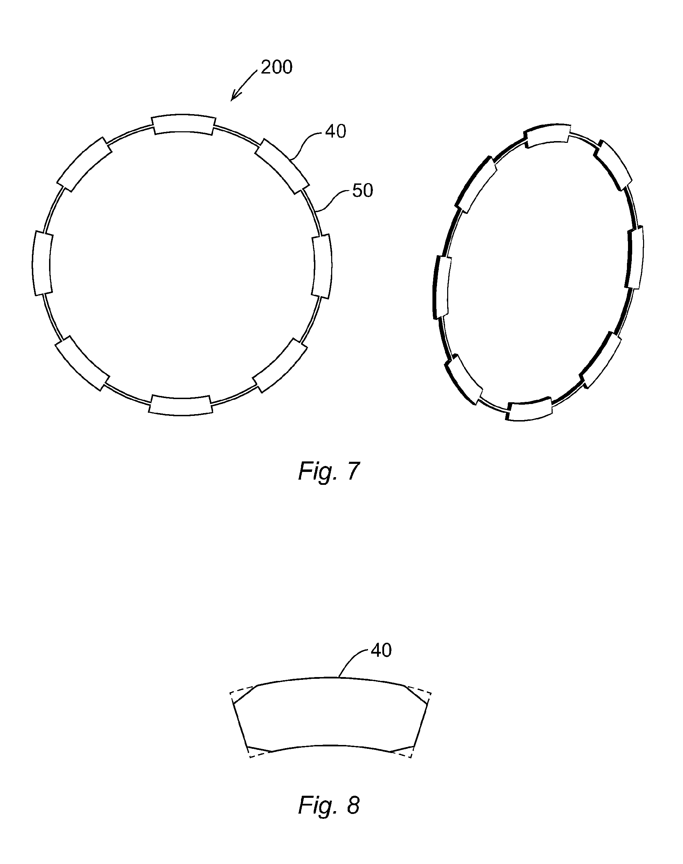

Referring to figure 7, according to one embodiment of the invention the rotor 10 comprises a plurality of circular rotor laminates 200 cut in one piece and stacked in axial direction. The shape of the rotor laminates 200 features d-axes 130 in the form of radial thick rotor poles 40, and q-axes 140 in the form of radial narrow isolation sections 50. According to the embodiment of figure 7 it is not the material but the small area of the isolation sections 50 that provides the magnetic isolation of the rotor poles 40 from each other in circumferential direction of the rotor 10. The isolation sections 50 need to be dimensioned to magnetically saturate such that at most twenty per cent of the total flux 170 is carried along them in normal operation of the machine.

Referring to figure 8, the rotor poles may have chamfered edges or another appropriate shaping that reduces torque fluctuation of the machine.

The invention is not limited to the embodiments shown above, but a person skilled in the art may modify them in many ways within the scope of the invention as defined by the claims. Thus, for example, the invention is not limited to rotors 10 and stators 100, 110 separated by radial air gaps 150, 160, but may also be applied to rotors 10 and stators 100, 110 separated by axial air gaps 150, 160.

## Claims

1. An electrical machine comprising:
a first stator (100),
a second stator (110), and
a rotor (10) arranged between the first and second stators (100, 110), the rotor (10) comprising at least two neighbouring rotor poles (40), the at least two rotor poles (40) being magnetically isolated from each other in a circumferential direction of the rotor (10),
**characterized in that** each of the at least two rotor poles (40) is configured to carry magnetic flux (170) in two opposite directions.

2. An electrical machine according to claim 1, wherein the at least two rotor poles (40) are identical.

3. An electrical machine according to claim 1, wherein the first stator (100) is arranged radial outside of the second stator (110), and the rotor (10) is arranged in radial direction between the first and second stators (100, 110).

4. An electrical machine according to any of the preceding claims, wherein the at least two rotor poles (40) are configured to carry magnetic flux (170) in both radial directions.

5. An electrical machine according to any of the preceding claims, wherein each of the at least two rotor poles (40) comprises material with a first magnetic permeability, the magnetic isolation between the at least two rotor poles (40) comprises material with a second magnetic permeability, the first magnetic permeability being at least five times the second magnetic permeability, such as at least ten times, or at least fifty times the second magnetic permeability.

6. An electrical machine according to any of the preceding claims, wherein the magnetic isolation between the at least two rotor poles (40) comprises aluminium, stainless steel or air.

7. An electrical machine according to any of the preceding claims, wherein the rotor (10) comprises a cylindrical and self-sustainable rotor frame (20) comprising aluminium or stainless steel.

8. An electrical machine according to any of the preceding claims, wherein each of the at least two rotor poles (40) comprises a plurality of laminated iron sheets (80).

9. An electrical machine according to any of the preceding claims, further comprising a first air gap (150) between the first stator (100) and the rotor (10), the smallest dimension between the first stator (100) and the second stator (110) being at least five times the smallest dimension of the first air gap (150), such as at least ten times the smallest dimension of the first air gap (150).

10. An electrical machine according to any of the preceding claims, wherein the rotor frame (20) is supported from between its axial ends by at least one radially extending spoke (180).

11. An electrical machine according to any of the preceding claims, wherein the rotor (10) comprises a plurality of circular rotor laminates (200) cut in one piece and stacked in axial direction.

12. An electrical machine according to any of the preceding claims, wherein each of the at least two rotor poles (40) have chamfered edges.

13. An electrical machine according to any of the preceding claims, wherein at most ten per cent, such as at most five per cent, of the total flux is carried in circumferential direction of the rotor (10) along the isolation sections (50) in normal operation of the machine.
